# EUROPEAN PATENT APPLICATION

(11) **EP 2 036 939 A1**
(43) Date of publication of application: **18.03.2009**
(21) Application number: 07745393.4
(22) Date of filing: 15.06.2007
(51) Int. Cl.: C08G 69/40, B32B 25/08, B32B 27/00

(54) **POLYETHER POLYAMIDE ELASTOMER**

(30) Priority: 16.06.2006 JP 2006166891
(71) Applicant: Ube Industries, Ltd., Ube-Shi, Yamaguchi 755-8633 (JP)
(72) Inventor: OKUSHITA, Hiroshi, Ube-shi, Yamaguchi 755-8633 (JP); TANAKA, Shouichi, Ube-shi, Yamaguchi 755-8633 (JP)
(74) Representative: Cabinet Plasseraud
(86) International application number: PCT/JP2007/062138
(87) International publication number: WO 2007/145324

(57) **Abstract**

Disclosed is a polyether polyamide elastomer particularly excellent in transparency while retaining properties such as dynamic physical properties, stiffness and bending-fatigue resistance. The polyether polyamide elastomer is produced by polymerizing (A) a polyamide-forming monomer selected from an aminocarboxylic acid compound (A1) represented by the following formula (1) and a lactam compound (A2) represented by the following formula (2), (B) a diamine compound comprising a triblock polyetherdiamine compound (B1) represented by the following formula (3) and at least one diamine compound (B2) selected from a branched saturated diamine having 6 to 22 carbon atoms, a branched alicyclic diamine having 6 to 16 carbon atoms and norbornanediamine, and (C) a dicarboxylic acid compound represented by the following formula (4),

H₂N-R¹-COOH (1)

wherein R¹ represents a linking group having a hydrocarbon chain, 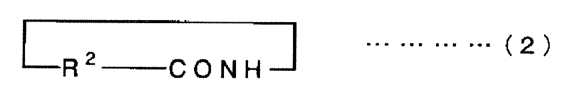 wherein R² represents a linking group having a hydrocarbon chain, 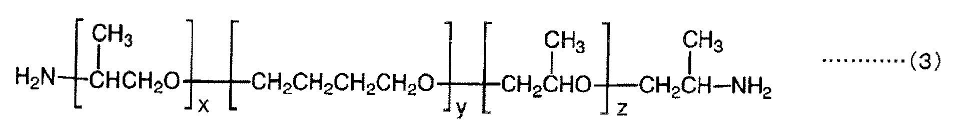 wherein x represents a number from 1 to 20, y represents a number from 4 to 50, and z represents a number from 1 to 20,

HOOC-(R³)ₘ-COOH (4)

wherein R³ represents a linking group having a hydrocarbon chain, and m represents 0 or 1.

## Description

### Technical Field

The present invention relates to a polyether polyamide elastomer excellent in transparency which has a polyamide hard segment and a polyether soft segment. More particularly, the invention relates to a polyether polyamide elastomer particularly excellent in transparency while retaining important practical properties of a thermoplastic elastomer, such as melt molding property, low-temperature impact resistance, low-temperature flexibility, dynamic physical properties, stiffness, bending-fatigue resistance and the like which are.

### Background Art

Patent Documents 1 and 2 disclose a polyether polyamide elastomer comprising polyamide units, polyethylene oxide units and dicarboxylic acid units.

However, since the polyether polyamide elastomer comprising polyamide units, polyethylene oxide units and dicarboxylic acid units shows a high water absorption, it is not advantageous in applications for a molded product (for example, soles of sport shoes or the like, mat) to be used outdoors or under severe climatic conditions, and its transparency is not sufficient either.

Patent Document 3 discloses a polyether polyamide elastomer comprising polyamide units, polybutylene oxide units and dicarboxylic acid units.

The polyether polyamide elastomer comprising polyamide units, polybutylene oxide units and dicarboxylic acid units shows a sufficiently low water absorption, but physical properties such as bending-fatigue resistance and the like tend to be insufficient, its transparency also tends to be insufficient, and it is hard to mention that adhesiveness to a resin sheet such as a polyurethane sheet or the like is sufficiently high.

Patent Documents 4 and 5 disclose a polyether polyamide elastomer comprising a polyamide unit, a polyether unit having XYX type structure formed by chemically bonding polypropylene oxide (X) and polybutylene oxide (Y), and a dicarboxylic acid unit. Furthermore, Patent Document 6 discloses a polyether polyamide elastomer comprising a polyamide unit, a polyether unit comprising (i) polyether having XYX type structure of polypropylene oxide (X) and polybutylene oxide (Y) and (ii) polypropylene oxide , and a dicarboxylic acid unit.

For the polyether polyamide elastomer comprising a polyamide unit, a polyether unit having XYX type structure formed by chemically bonding polypropylene oxide (X) and polybutylene oxide (Y), and a dicarboxylic acid unit, and the polyether polyamide elastomer comprising a polyamide unit, a polyether unit comprising (i) polyether having XYX type structure of polypropylene oxide (X) and polybutylene oxide (Y) and (ii) polypropylene oxide, and a dicarboxylic acid unit, the water absorption is sufficiently low, physical properties such as bending-fatigue resistance and the like are sufficient, adhesiveness to a resin sheet such as a polyurethane sheet or the like is also excellent. However, it is hard to mention that transparency is sufficient.

Patent Document 7 describes a transparent copolymer used in the production of sports shoes having a polyamide block and a polyether block.

However, this polymer is a polyether polyamide elastomer mainly composed of PTMG having a number average molecular weight Mn of from 200 to 4,000 g/mol as a polyether block, and it is different from the polyether polyamide elastomer of the present invention that comprises polyether block composed of polyetherdiamine having XYX type structure in which polypropylene oxide (X) and polybutylene oxide (Y) are chemically bonded. Since the polymer of Patent Document 7 has ester bondings in the main chain of the molecule, water resistance is low as compared to that of the polyether polyamide elastomer of the present invention. Further, transparency is inferior as well because PTMG is crystalline.
Patent Document 1: Japanese Laid-open Patent Publication No. H09-118750
Patent Document 2: Japanese Laid-open Patent Publication No. 2000-7780
Patent Document 3: Japanese Patent No. 3,199,797
Patent Document 4: Japanese Laid-open Patent Publication No. 2004-161964
Patent Document 5: Japanese Laid-open Patent Publication No. 2004-286341
Patent Document 6: Japanese Laid-open Patent Publication No. 2004-346274
Patent Document 7: Japanese PCT International Patent Laid-open No. 2006-503951

### Disclosure of the Invention

### Problems to be Solved by the Invention

An object of the present invention is to solve the aforementioned problems and therefore to provide a polyether polyamide elastomer having sufficiently low water absorption, satisfactory physical properties such as bending-fatigue resistance and the like, excellent adhesiveness to a resin sheet such as a polyurethane sheet or the like, and excellent transparency.

### Means for Solving the Problems

After an intensive investigation, the present inventors have found a polyether polyamide elastomer having sufficiently low water absorption, satisfactory physical properties such as bending-fatigue resistance and the like, excellent adhesiveness to a resin sheet such as a polyurethane sheet or the like, and excellent transparency, wherein the polyether polyamide elastomer can be obtained by polymerizing a polyamide-forming monomer comprising an aminocarboxylic acid compound and/or a lactam compound, diamine compounds comprising a polyetherdiamine compound having XYX type structure in which polypropylene oxide (X) and polybutylene oxide (Y) are chemically bonded and at least one diamine selected from a branched saturated diamine having 6 to 22 carbon atoms, a branched alicyclic diamine having 6 to 16 carbon atoms and norbornanediamine, and a dicarboxylic acid compound. Thus, the present invention has been completed.

That is, the present invention relates to a polyether polyamide elastomer obtained by polymerizing:
(A) a polyamide-forming monomer selected from an aminocarboxylic acid compound (A1) represented by the following formula (1) and a lactam compound (A2) represented by the following formula (2),
(B) diamine compounds comprising a triblock polyetherdiamine compound (B1) represented by the following formula (3) and at least one diamine compound (B2) selected from a branched saturated diamine having 6 to 22 carbon atoms, a branched alicyclic diamine having 6 to 16 carbon atoms and norbornanediamine, and
(C) a dicarboxylic acid compound represented by the following formula (4).

H₂N-R¹-GOOH ·····(1) wherein R¹ represents a linking group having a hydrocarbon chain.

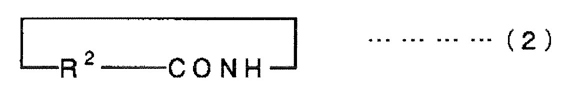

wherein R² represents a linking group having a hydrocarbon chain.

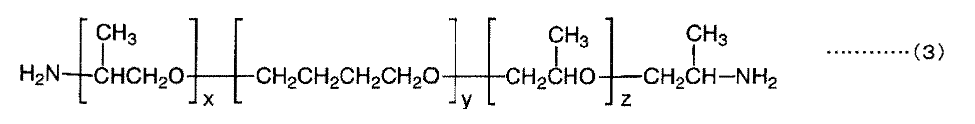

wherein x represents a number from 1 to 20, y represents a number from 4 to 50, and z represents a number from 1 to 20.

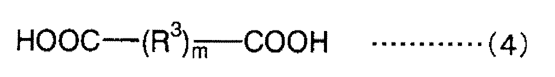

wherein R³ represents a linking group having a hydrocarbon chain, and m represents 0 or 1.

Preferred embodiments of the present invention are exemplified below:
1: The polyether polyamide elastomer, wherein the proportion of (A) the polyamide-forming monomer is from 10 to 95 weight %, based on the total amount of (A) the polyamide-forming monomer, (B) the diamine compound and (C) the dicarboxylic acid compound.
2: The polyether polyamide elastomer, wherein the proportion of (A) the polyamide-forming monomer is from 15 to 80 weight % and the total proportion of (B) the diamine compound and (C) the dicarboxylic acid compound is from 20 to 85 weight %, based on the total amount of (A) the polyamide-forming monomer, (B) the diamine compound and (C) the dicarboxylic acid compound.
3: The polyether polyamide elastomer, wherein R¹ in the formula (1) contains an alkylene group having 2 to 20 carbon atoms.
4: The polyether polyamide elastomer, wherein R² in the formula (2) contains an alkylene group having 2 to 20 carbon atoms.

5: The polyether polyamide elastomer, wherein x in the formula (3) represents a number from 2 to 6, y represents a number from 6 to 12, and z represents a number from 1 to 5.
6: The polyether polyamide elastomer, wherein x in the formula (3) represents a number from 2 to 10, y represents a number from 13 to 28, and z represents a number from 1 to 9.

7: The polyether polyamide elastomer, wherein the proportion of the diamine compound (B2) is from 0.5 to 10 weight %, based on the total amount of (A) the polyamide-forming monomer, (B) the diamine compound and (C) the dicarboxylic acid compound.

8: The polyether polyamide elastomer, wherein the branched saturated diamine having 6 to 22 carbon atoms is diamine selected from 2,2,4-trimethyl-1,6-diaminohexane, 2,4,4-trimethyl-1,6-diaminohexane, 1,2-diaminopropane, 1,3-diaminopentane, 2-methyl-1,5-diaminopentane, 2-methyl-1,8-diaminooctane and a mixture thereof.
9: The polyether polyamide elastomer, wherein the branched alicyclic diamine having 6 to 16 carbon atoms is diamine selected from 5-amino-2,2,4-trimethyl-1-cyclopentanemethylamine, 5-amino-1,3,3-trimethylcyclohexanemethylamine and a mixture thereof.
10: The polyether polyamide elastomer, wherein norbornanediamine is diamine selected from 2,5-norbornanedimethylamine, 2,6-norbornanedimethylamine and a mixture thereof.

11: The polyether polyamide elastomer, wherein (C) the dicarboxylic acid compound is an aliphatic dicarboxylic acid or an alicyclic dicarboxylic acid.
12: The polyether polyamide elastomer, wherein m in the formula (4) represents 1 and R³ represents an alkylene group having 1 to 20 carbon atoms.

13: A laminate obtained by laminating a layer made of the aforementioned polyether polyamide elastomer of the present invention and a layer made of other thermoplastic resin.
14: The laminate, wherein the other thermoplastic resin is polyurethane,
15: The laminate, wherein the polyurethane is thermoplastic polyurethane.
16: The laminate, wherein the thermoplastic polyurethane has a polyester diol soft segment and/or a polyether diol soft segment and/or a polycarbonate diol soft segment and/or a polycaprolactone diol soft segment.

### Effect of the Invention

The polyether amide elastomer of the present invention is a polyamide elastomer which has a polyamide hard segment and an XYX type triblock polyetherdiamine soft segment, contains at least one diamine selected from a branched saturated diamine having 6 to 22 carbon atoms, a branched alicyclic diamine having 6 to 16 carbon atoms and norbornanediamine, and is excellent in stiffness, melt molding property, low-temperature flexibility, low-temperature impact resistance, bending-fatigue resistance, transparency, color tone and the like, particularly excellent in properties such as transparency, bending-fatigue resistance, impact resistance and the like.

The polyamide elastomer of the present invention can be firmly bonded to thermoplastic polyurethane and is advantageous for the production of a laminate with reduced warpage. Accordingly, this laminate can be used for soles of sports shoes, ski boots and the like, which is excellent in the balance of stiffness such as bending strength, bending elastic modulus and the like, and rubber elasticity such as bending-fatigue resistance, low-temperature impact resistance, low-temperature flexibility and the like, and is suitable for a material requiring low warpage.

### Best Mode for Carrying Out the Invention

The polyether polyamide elastomer of the present invention is a polyether polyamide elastomer obtained by polymerizing:
(A) a polyamide-forming monomer selected from an aminocarboxylic acid compound (A1) represented by the formula (1) and a lactam compound (A2) represented by the formula (2),
(B) diamine compounds comprising an XYX type triblock polyetherdiamine (B1) represented by the formula (3) (Y is polyoxybutylene) and at least one diamine compound (B2) selected from a branched saturated diamine having 6 to 22 carbon atoms, a branched alicyclic diamine having 6 to 16 carbon atoms and norbornanediamine, and
(C) a dicarboxylic acid compound represented by the formula (4).

In the polyether polyamide elastomer of the present invention, it is preferable that terminal carboxylic acid or carboxyl group and terminal amino group, each contained in (A) the polyamide-forming monomer, (B) the diamine compound and (C) the dicarboxylic acid compound, are used in a proportion such that they are almost in equimolar amounts.

In particular, when one end of (A) the polyamide-forming monomer is an amino group and the other end is a carboxylic acid or a carboxyl group, it is preferable that the amino group of (B) the diamine compound and the carboxyl group of (C) the dicarboxylic acid compound are in a proportion such that they are almost in equimolar amounts.

Next, the aminocarboxylic acid compound (A1) and the lactam compound (A2) in (A) the polyamide-forming monomer will be described.

In the aminocarboxylic acid compound (A1), R¹ preferably represents a hydrocarbon molecular chain having 2 to 20 carbon atoms and particularly an alkylene group having 2 to 20 carbon atoms, further preferably a hydrocarbon molecular chain having 3 to 18 carbon atoms and particularly an alkylene group having 3 to 18 carbon atoms, more preferably a hydrocarbon molecular chain having 4 to 15 carbon atoms and particularly an alkylene group having 4 to 15 carbon atoms, particularly preferably a hydrocarbon molecular chain having 10 to 15 carbon atoms and particularly an alkylene group having 4 to 15 carbon atoms, and particularly preferably a hydrocarbon molecular chain having 10 to 15 carbon atoms and particularly an alkylene group having 10 to 15 carbon atoms.

In the lactam compound (A2), R² preferably represents a hydrocarbon molecular chain having 3 to 20 carbon atoms and particularly an alkylene group having 3 to 20 carbon atoms, further preferably a hydrocarbon molecular chain having 3 to 18 carbon atoms and particularly an alkylene group having 3 to 18 carbon atoms, more preferably a hydrocarbon molecular chain having 4 to 15 carbon atoms and particularly an alkylene group having 4 to 15 carbon atoms, particularly preferably a hydrocarbon molecular chain having 10 to 15 carbon atoms and particularly an alkylene group having 4 to 15 carbon atoms, and particularly preferably a hydrocarbon molecular chain having 10 to 15 carbon atoms and particularly an alkylene group having 10 to 15 carbon atoms.

Examples of the aminocarboxylic acid compound (A1) include aliphatic ω-aminocarboxylic acids having 5 to 20 carbon atoms such as 6-aminocaproic acid, 7-aminoheptanoic acid, 8-aminooctanoic acid, 10-aminocapric acid, 11-aminoundecanoic acid, 12-aminododecanoic acid and the like.

Examples of the lactam compound (A2) include aliphatic lactam compounds having 5 to 20 carbon atoms such as ε-caprolactam, ω-enantolactame, ω-undecalactam, ω-dodecalactam, 2-pyrrolidone and the like.

The proportion of (A) the polyamide-forming monomer is preferably from 10 to 95 weight %, further preferably from 15 to 95 weight %, more preferably from 15 to 85 weight % and particularly preferably from 15 to 80 weight %, based on the total components of the polyether polyamide elastomer. When the proportion of (A) the polyamide-forming monomer is smaller than the above range based on the total components of the polyether polyamide elastomer, the crystallinity of the polyamide component is lowered in some cases, and mechanical physical properties such as strength, elastic modulus and the like are deteriorated in some cases; therefore, it may not be preferable. When the proportion of (A) the polyamide-forming monomer is greater than the above range based on the total components of the polyether polyamide elastomer, functions such as rubber elasticity, flexibility and the like, and performance as an elastomer are hardly exhibited in some cases; therefore, it may not be preferable either.

As the XYX type triblock polyetherdiamine compound (B1) represented by the formula (3) in the diamine compound of the present invention, there can be used polyetherdiamine produced by adding propylene oxide to both terminals of poly(oxytetramethylene)glycol or the like to give polypropylene glycol, and then reacting this polypropylene glycol terminal with ammonia or the like.

In the XYX type triblock polyetherdiamine compound (B1), each of x and z is a number from 1 to 20, preferably a number from 1 to 18, further preferably a number from 1 to 16, more preferably a number from 1 to 14 and particularly preferably a number from 1 to 12, and y is a number from 4 to 50, preferably a number from 5 to 45, further preferably a number from 6 to 40, more preferably a number from 7 to 35 and particularly preferably a number from 8 to 30.

In the XYX type triblock polyetherdiamine compound (B1), when each of x and z is smaller than the above range, properties of the obtained elastomer, particularly transparency, become deteriorated; therefore, it is not preferable. When y is smaller than the above range, rubber elasticity is lowered; therefore, it is not preferable either. Furthermore, when x and z are greater than the above range or y is greater than the above range, the compatibility with the polyamide components become lowered so that stiff elastomer is hardly obtained; therefore, it is not preferable.

Specific examples of the XYX type triblock polyetherdiamine compound (B1) include XTJ-533 (in the formula (3), x is around 12, y is around 11 and z is around 11), XTJ-536 (in the formula (3), x is around 8.5, y is around 17 and z is around 7.5), XTJ-542 (in the formula (3), x is around 3, y is around 9 and z is around 2), and XTJ-559 (in the formula (3), x is around 3, y is around 14 and z is around 2) manufactured by Huntsman Corporation, USA and the like.

Furthermore, as the XYX type triblock polyetherdiamine compound (B1), there can also be used XYX-1 (in the formula (3), x is around 3, y is around 14 and z is around 2), XYX-2 (in the formula (3), x is around 5, y is around 14 and z is around 2), XYX-3 (in the formula (3), x is around 3, y is around 19 and z is around 2) and the like.

The proportion of the XYX type triblock polyetherdiamine compound (B1) is preferably from 2 to 87 weight % and particularly preferably from 7 to 78 weight %, based on the total amount of (A) the polyamide-forming monomer, (B) the diamine compound and (C) the dicarboxylic acid compound. When the proportion of the XYX type triblock polyetherdiamine compound (B1) is smaller than the above range, properties such as bending-fatigue resistance and the like as an elastomer are not fully exhibited so that it is not preferable as a polyamide elastomer in some cases. When the proportion of the XYX type triblock polyetherdiamine compound (B1) is greater than the above range, excellent dynamic strength characteristic of polyamide is not exhibited because the polyamide components are small, so that it is not preferable as a polyamide elastomer in some cases.

Meanwhile, in the diamine compound (B2) of the present invention, examples of the branched saturated diamine having 6 to 22 carbon atoms include 2,2,4-trimethyl-1,6-hexanediamine, 2,4,4-trimethyl-1,6-hexanediamine, 1,2-diaminopropane, 1,3-diaminopentane, 2-methyl-1,5-diaminopentane, 2-methyl-1,8-diaminooctane and the like. These compounds may be used alone, or two or more compounds may be mixed in an appropriate proportion prior to use.

In the diamine compound (B2), examples of the branched alicyclic diamine having 6 to 16 carbon atoms include 5-amino-2,2,4-trimethyl-1-cyclopentanemethylamine, 5-amino-1,3,3-trimethylcyclohexanemethylamine (also called isophorone diamine) and the like. Further, these diamines may be any of a cis form and a trans form, or may be a mixture of these isomers. Furthermore, these diamines may be used alone, or two or more diamines may be mixed in an appropriate proportion prior to use.

In the diamine compound (B2), examples of norbornanediamine include 2,5-norbornanedimethylamine, 2,6-norbornanedimethylamine or a mixture thereof and the like. These may be used alone, or two kinds thereof may be mixed in an appropriate proportion prior to use.

The proportion of the diamine compound (B2) is preferably from 0.5 to 10 weight % and further preferably from 1 to 5 weight %, based on the total amount of (A) the polyamide-forming monomer, (B) the diamine compound and (C) the dicarboxylic acid compound. When the proportion of the diamine compound (B2) is smaller than the above range, transparency is not fully exhibited in some cases. When the proportion of (B2) the diamine compound is greater than the above range, the crystallinity derived from the polyamide-forming monomer is lowered and sufficient dynamic strength is not exhibited in some cases.

Furthermore, as (B) the diamine compound of the present invention, other diamine compounds (B3) in addition to the triblock polyetherdiamine compound (B1) and the diamine compound (B2) may be contained.
Examples of the other diamine compound (B3) include aliphatic diamine compounds such as ethylene diamine, trimethylene diamine, tetramethylene diamine, hexamethylene diamine, heptamethylene diamine, octamethylene diamine, nonamethylene diamine, decamethylene diamine, undecamethylene diamine, dodecamethylene diamine, 2,2,4-trimethylhexamethylene diamine, 2,4,4-trimethylhexamethylene diamine, 3-methylpentanemethylene diamine and the like; alicyclic diamine compounds such as bis(4-aminocyclohexyl)methane, bis(4-aminocyclohexyl)propane, 1,3-bisaminomethylcyclohexane, 1,4-bisaminomethylcyclohexane and the like; and aromatic diamine compounds such as m-xylylene diamine, p-xylylene diamine and the like. These diamine compounds may be used alone, or two or more compounds may be used in a proper combination thereof.

In (C) the dicarboxylic acid compound of the present invention, R³ is preferably a molecular chain of 1 to 20 carbon atoms and particularly an alkylene group having 1 to 20 carbon atoms, further preferably a hydrocarbon molecular chain having 1 to 15 carbon atoms and particularly an alkylene group having 1 to 15 carbon atoms, more preferably a hydrocarbon molecular chain having 2 to 12 carbon atoms and particularly an alkylene group having 2 to 12 carbon atoms, and particularly preferably a hydrocarbon molecular chain having 4 to 10 carbon atoms and particularly an alkylene group having 4 to 10 carbon atoms. m represents 0 or 1.

As (C) the dicarboxylic acid compound, there can be used at least one kind of dicarboxylic acid selected from aliphatic, alicyclic and aromatic dicarboxylic acids or a derivative thereof.

Specific examples of (C) the dicarboxylic acid compound include linear aliphatic dicarboxylic acid compounds having 2 to 25 carbon atoms such as oxalic acid, succinic acid, glutaric acid, adipic acid, pimelic acid, suberic acid, azelaic acid, sebacic acid, dodecanedioic acid and the like; aliphatic dicarboxylic acids such as a dimerized aliphatic dicarboxylic acid having 14 to 48 carbon atoms which can be produced by dimerization of unsaturated fatty acids obtainable by fractional distillation of triglycerides (i.e., dimer acids) and their hydrogenated products (i.e., hydrogenated dimer acids); alicyclic dicarboxylic acids such as 1,4-cyclohexanedicarboxylic acid and the like; and aromatic dicarboxylic acids such as terephthalic acid, isophthalic acid and the like. As the dimer acid and hydrogenated dimer acid, there can be used Pripol 1004, Pripol 1006, Pripol 1009, Pripol 1013 and so on.
The proportion of (C) the dicarboxylic acid compound is preferably determined such that the amino group of (B) the diamine compound and the carboxyl group of (C) the dicarboxylic acid compound are almost in equimolar amounts.

Hardness (Shore D) of the polyether polyamide elastomer of the present invention is preferably in the range of 15 to 70, further preferably in the range of 18 to 70, more preferably in the range of 20 to 70 and particularly preferably in the range of 25 to 70.

The tensile strength at yield point of the polyether polyamide elastomer of the present invention is preferably in the range of 3 to 25 MPa, further preferably in the range of 3 to 22 MPa, more preferably in the range of 3 to 20 MPa and particularly preferably in the range of 3 to 18 MPa. When the tensile strength at yield point is within the above range, an elastomer particularly excellent in stiffness and rubber elasticity is obtained.

The tensile elongation at break of the polyether polyamide elastomer of the present invention is preferably not less than 300% and particularly preferably not less than 600%. When it is smaller than this range, performance such as stiffness, rubber elasticity or the like as an elastomer is hardly exhibited in some cases.

The bending strength of the polyether polyamide elastomer of the present invention is preferably from 0.8 to 20 MPa, further preferably from 1 to 18 MPa, more preferably from 1.1 to 15 MPa and particularly preferably from 1.2 to 13 MPa. When the bending strength of the polyether polyamide elastomer is in the above range, an elastomer excellent in the balance of stiffness and rubber elasticity is obtained; therefore, it is preferable.

The bending modulus of the polyether polyamide elastomer of the present invention is preferably from 20 to 400 MPa, further preferably from 20 to 350 MPa, more preferably from 20 to 300 MPa and particularly preferably from 20 to 250 MPa. The polyether polyamide elastomer having the bending modulus within the above range gives an elastomer excellent in the balance between stiffness and rubber elasticity; therefore, it is preferable.

Haze of the polyether polyamide elastomer of the present invention is preferably not more than 15, further preferably not more than 13, more preferably not more than 10 and particularly preferably not more than 7. When haze is lower than the above range, an elastomer excellent in transparency is obtained.

The water absorption (%) of the polyether polyamide elastomer of the present invention is preferably not more than 3%, further preferably not more than 2.7% and particularly preferably not more than 2.5%.

For the polyether polyamide elastomer of the present invention, the number of flexing operation to produce cracks in the bending test according to the de Mattia method is preferably not less than 50,000 times, further preferably not less than 100,000 times, more preferably not less than 110,000 times and particularly preferably not less than 120,000 times. When the number of flexing operation to produce cracks of the polyether polyamide elastomer is in the above range, bending-fatigue resistance is excellent; therefore, it is preferable.

Preferably, the polyether polyamide elastomer of the present invention are not broken in the measurement of impact strength (izot, with notch) at 23°C (simply referred to as NB) because it is particularly excellent in impact resistance.

Preferably, the polyether polyamide elastomer of the present invention has a deflection temperature under load of not less than 50°C. When the temperature is less than the above range, a material is easily deformed while in use; therefore, it is not preferable.

As an example of a method for producing the polyether polyamide elastomer of the present invention, there can be used a method comprising steps of melt-polymerizing four components of (A) the polyamide-forming monomer, the XYX type triblock polyetherdiamine compound (B1), the diamine compound (B2) and (C) the dicarboxylic acid compound at the same time under increased pressure and/or atmospheric pressure , and as necessary, further melt-polymerizing at a reduced pressure. Also, there can be used a method comprising polymerizing two components of (A) the polyamide-forming monomer and (C) the dicarboxylic acid compound in advance, and subsequently polymerizing the XYX type triblock polyetherdiamine compound (B1) and the diamine compound (B2).

In the production of the polyether polyamide elastomer of the present invention, a method for feeding a raw material is not particularly limited. In terms of the feeding proportion of (A) the polyamide-forming monomer, the XYX type triblock polyetherdiamine compound (B1), the diamine compound (B2) and (C) the dicarboxylic acid compound, (A) the polyamide-forming monomer is preferably in the range of 10 to 95 weight % and particularly preferably in the range of 15 to 80 weight %, the XYX type triblock polyetherdiamine compound (B1) is preferably from 2 to 87 weight % and particularly preferably from 7 to 78 weight %, and the diamine compound (B2) is preferably from 0.5 to 10 weight % and particularly preferably from 1 to 5 weight %, based on the total components. The XYX type triblock polyetherdiamine compound(B1), the diamine compound (B2) and (C) the dicarboxylic acid compound are preferably fed such that amino groups of the XYX type triblock polyetherdiamine compound (B1) and the diamine compound (B2) (when other diamine compound is contained, its amino group is also included) and the carboxyl group of (C) the dicarboxylic acid compound are almost in equimolar amounts.

The production of the polyether polyamide elastomer of the present invention may be carried out at a polymerization temperature of preferably from 150 to 300°C, further preferably from 160 to 280°C and particularly preferably from 170 to 250°C. When the polymerization temperature is lower than the above temperature, the polymerization reaction is slow, and when it is higher than the above temperature, the pyrolysis easily occurs so that a polymer having excellent physical properties is not obtained in some cases.

When ω-aminocarboxylic acid is used as (A) the polyamide-forming monomer, the polyether polyamide elastomer of the present invention can be produced by melt-polymerization under atmospheric pressure or a method comprising melt-polymerization under atmospheric pressure and subsequent melt-polymerization under reduced pressure.

On the other hand, when lactam is used as (A) the polyamide-forming monomer, the polyether polyamide elastomer of the present invention can be produced by a method including, with the presence of an appropriate amount of water, melt-polymerization under increased pressure of 0.1 to 5 MPa and subsequent melt-polymerization under atmospheric pressure and/or reduced pressure.

The polyether polyamide elastomer of the present invention can be produced at a polymerization time of usually 0.5 to 30 hours. When the polymerization time is shorter than the above range, the molecular weight is not fully increased. When it is longer than the above range, coloring or the like occurs due to the pyrolysis. In either case, a polyether polyamide elastomer having intended physical properties is not obtained in some cases.

In the production of the polyether polyamide elastomer of the present invention, the polymerization may be carried out by a batch system or a continuous system, wherein a batch type reaction vessel, a single-tank type or multi-tank type continuous reactor, a tubular continuous reactor and the like may be used alone or in a proper combination thereof.

Preferably, the polyether polyamide elastomer of the present invention has a relative viscosity (ηr) in the range of 1.2 to 3.5 (0.5 weight/volume % m-cresol solution, at 25°C).

In the production of the polyether polyamide elastomer of the present invention, as necessary, an additive may be added for adjusting the molecular weight or for ensuring a stable melt viscosity in mold processing. Examples thereof include monoamines or diamines such as laurylamine, stearylamine, hexamethylene diamine, metaxylylene diamine and the like; and monocarboxylic acids or dicarboxylic acids such as acetic acid, benzoic acid, stearic acid, adipic acid, sebacic acid, dodecanedioic acid and the like. It is preferable that the amount of these additives used is properly added in such an amount to give a finally obtained elastomer having a relative viscosity (ηr) of 1.2 to 3.5 (0.5 weight/volume % m-cresol solution, 25°C).

In the production of the polyether polyamide elastomer of the present invention, the amount of the aforementioned monoamines and diamines, monocarboxylic acids and dicarboxylic acids and the like is preferably in the ranges in which properties of the obtained polyether polyamide elastomer are not hindered.

In the production of the polyether polyamide elastomer of the present invention, a catalyst may be employed, if desired. Examples thereof include phosphoric acid, pyrophosphoric acid, polyphosphoric acid and the like, and further inorganic phosphoric compounds such as phosphorous acid, hypophosphorous acid, and their alkali metal salts and their alkaline earth metal salts for aiming both effects of a catalyst and a heat resistant agent. The amount of the catalyst added is usually from 50 to 3,000 ppm, based on the feed amount.

To the polyether polyamide elastomer of the present invention, there can be added heat resistant agents, UV absorbers, anti-light stabilizers, oxidation inhibitors, antistatic agents, lubricants, anti-slipping agent, crystallizing nuclei, tackiness agents, sealing improvers, anti-foggants, mold releasing agents, plasticizers, pigments, dyes, perfume, flame retardants, reinforcing materials or the like in the ranges in which its properties are not hindered.

The polyether polyamide elastomer of the present invention has a low water absorption, excellent melt molding property, excellent molding processability, excellent stiffness, excellent bending-fatigue resistance, excellent rebound elasticity, excellent transparency, low specific gravity, excellent low-temperature flexibility, excellent silencing properties, excellent rubber-like properties and the like.

The polyether polyamide elastomer of the present invention can be molded by a known molding method such as injection molding, extrusion molding, blow molding, vacuum molding, pressure molding or the like for obtaining a molded product.
Examples of an injection molded product of the polyether polyamide elastomer of the present invention include sole materials of shoes in the fields of baseball, football, athletic sports and the like for which materials of stiffness, bending-fatigue resistance, rebound elasticity and low specific gravity are preferably used. Examples of other injection molded products include gears of mechanical/electrical precision appliances, connectors, seals, automobile molding, sealing materials and the like.

Examples of an extrusion molded product of the polyamide elastomer of the present invention include tubes, hoses, oddly-shaped products, sheets, films, monofilaments and the like.

Examples of a blow molded product of the polyamide elastomer of the present invention include mirror boots of automobiles, uniform rate joint boots and the like.

The polyether polyamide elastomer of the present invention has a good compatibility with a thermoplastic resin such as polyamide (other than the polyether polyamide elastomer of the present invention), polyvinyl chloride, thermoplastic polyurethane, ABS resin and the like. The polyether polyamide elastomer may be blended with these thermoplastic resins so as to improve moldability, impact resistance, elasticity, flexibility and the like of these resins.

Furthermore, a layer made of the polyether polyamide elastomer of the present invention can be laminated with a layer of other thermoplastic resin to give a laminate.
The laminate has one or two or more layers comprising a layer made of the polyether polyamide elastomer of the present invention and a layer made of other thermoplastic resin. A thickness of each layer is not particularly limited, but it can be adjusted depending on the kind of a polymer constituting each layer, the number of the layers of the whole in the laminate, use and the like.

Meanwhile, the number of layers of the laminate is two or more, but the number of the layers of the whole in the laminate is not particularly limited and any number of layers is acceptable. Depending on the mechanical structure of the production apparatus of the laminate, the number of layers is generally not more than 7 and preferably from 2 to 5.
Furthermore, for the purpose of enhancing inter-layer adhesive strength, an adhesive layer may be arranged. Also, a base material, for example, paper, a metal material, a non-stretched, uniaxially or biaxially stretched plastic film or sheet, a woven fabric, a nonwoven fabric, a metal cotton-like material, a woody material and the like can also be optionally laminated in addition to thermoplastic resins. Examples of the metal material include metal such as aluminum, iron, copper, nickel, gold, silver, titanium, molybdenum, magnesium, manganese, lead, tin, chromium, beryllium, tungsten, cobalt and the like, a metal compound, alloys made of two or more kinds thereof such as alloy steel (e.g., stainless steel and the like), aluminum alloy, copper alloy such as brass, bronze and the like, nickel alloy and the like.

As the adhesive layer, preferably used are olefin based polymers containing a carboxyl group and its salts, an acid anhydride group or an epoxy group. Examples of the olefin based polymer include polyethylene, polypropylene, ethylene-propylene copolymer, ethylene-butene copolymer, polybutene, ethylene-propylene-diene copolymer, polybutadiene, butadiene-acrylonitrile copolymer, polyisoprene, butene-isoprene copolymer and the like. Furthermore, the olefin based polymer may be those in which carboxylic acid ester is copolymerized therein, and the examples thereof include polymers obtained by copolymerizing methyl acrylate, methyl methacrylate, ethyl acrylate, ethyl methacrylate, propyl acrylate, propyl methacrylate, butyl acrylate, butyl methacrylate and the like. More specific examples thereof include olefin- (meth)acrylate ester copolymers such as ethylene-methyl acrylate copolymer, ethylene-ethyl acrylate copolymer, ethylene-propyl acrylate copolymer, ethylene-butyl acrylate copolymer, ethylene-methyl methacrylate copolymer, ethylene-ethyl methacrylate copolymer, ethylene-propyl methacrylate copolymer, ethylene-butyl methacrylate copolymer, ethylene-isobutyl methacrylate copolymer and the like; and (meth)acrylate ester-acrylonitrile copolymers such as methyl acrylate-acrylonitrile copolymer, methyl methacrylate-acrylonitrile copolymer, propyl acrylate-acrylonitrile copolymer, propyl methacrylate-acrylonitrile copolymer, butyl acrylate-acrylonitrile copolymer, butyl methacrylate-acrylonitrile copolymer and the like.

A carboxyl group and its salts, an acid anhydride group or an epoxy group may be in a form of either a copolymer introduced into the main chain of a polyolefin molecule or a graft polymer introduced into the side chain.
The carboxyl group and its salts, the acid anhydride group and the epoxy group may be introduced by acrylic acid, methacrylic acid, maleic acid, fumaric acid, itaconic acid, crotonic acid, mesaconic acid, citraconic acid, glutaconic acid, cis-4-cyclohexene-1,2-dicarboxylic acid, endocis-bicyclo[2.2.1]hept-5-en-2,3-dicarboxylic acid and a metal salt of these carboxylic acids (Na, Zn, K, Ca, Mg and the like), maleic anhydride, itaconic anhydride, citraconic anhydride, fumaric anhydride, endobicyclo[2.2.1]-5-heptene-2,3-dicarboxylic acid anhydride, glycidyl acrylate, glycidyl methacrylate, glycidyl ethacrylate, glycidyl itaconate, glycidyl citraconate and the like.
As the adhesive layer, there can be used the above-exemplified olefin based polymer containing a functional group such as the aforementioned carboxyl group and its salts, the acid anhydride group, the epoxy group or the like.

Examples of the other thermoplastic resin include polyolefin based resin such as high-density polyethylene (HDPE), low-density polyethylene (LDPE), ultrahigh molecular weight polyethylene (UHMWPE), polypropylene (PP), ethylene/propylene copolymer (EPR), ethylene/butene copolymer (EBR), ethylene/vinyl acetate copolymer (EVA), ethylene/vinyl acetate copolymer saponified product (EVOH), ethylene/acrylic acid copolymer (EAA), ethylene/methacrylic acid copolymer (EMAA), ethylene/methyl acrylate copolymer (EMA), ethylene/methyl methacrylate copolymer (EMMA), ethylene/ethyl acrylate (EEA) and the like; the above-mentioned polyolefin based resin containing a functional group such as a carboxyl group and its salts, an acid anhydride group, an epoxy group or the like; polyester based resin such as polybutylene terephthalate (PBT), polyethylene terephthalate (PET), polyethylene isophthalate (PEI), PET/PEI copolymer, polyarylate (PAR), polybutylene naphthalate (PBN), polyethylene naphthalate (PEN), liquid crystal polyester (LCP) and the like; polyether based resin such as polyacetal (POM), polyphenylene oxide (PPO) and the like; polysulfone based resin such as polysulfone (PSF), polyethersulfone (PES) and the like; polythioether based resin such as polyphenylene sulfide (PPS), polythioether sulfone (PTES) and the like; polyketone based resin such as polyether ether ketone (PEEK), polyallyl ether ketone (PAEK) and the like; polynitrile based resin such as polyacrylonitrile (PAN), polymethacrylonitrile, acrylonitrile/styrene copolymer (AS), methacrylonitrile/styrene copolymer, acrylonitrile/butadiene/styrene copolymer (ABS), methacrylonitrile/styrene/butadiene copolymer (MBS) and the like; polymethacrylate based resin such as polymethyl methacrylate (PMMA), polyethyl methacrylate (PEMA) and the like; polyvinyl based resin such as polyvinyl alcohol (PVA), polyvinylidene chloride (PVDC), polyvinyl chloride (PVC), vinyl chloride/vinylidene chloride copolymer, vinylidene chloride/methyl acrylate copolymer and the like; cellulose based resin such as cellulose acetate, cellulose butyrate and the like; fluorocarbon based resin such as polyvinylidene fluoride (PVDF), polyvinyl fluoride (PVF), polychlorotrifluoroethylene (PCTFE), ethylene/tetrafluoroethylene copolymer (ETFE), ethylene/chlorotrifluoroethylene copolymer (ECTFE), tetrafluoroethylene/hexafluoropropylene copolymer (TFE/HFP, FEP), tetrafluoroethylene/hexafluoropropylene/vinylidene fluoride copolymer (TFE/HFP/VDF,THV), tetrafluoroethylene/fluoro (alkyl vinyl ether) copolymer (PFA) and the like; polycarbonate based resin such as polycarbonate (PC) and the like; polyimide based resin such as thermoplastic polyimide (PI), polyamideimide (PAI), polyetherimide and the like; thermoplastic polyurethane based resin; and polyamide based resin such as polyethylene adipamide (nylon 26), polytetramethylene adipamide (nylon 46), polyhexamethylene adipamide (nylon 66), polyhexamethylene azelaamide (nylon 69), polyhexamethylene sebacamide (nylon 610), polyhexamethylene undecamide (nylon 611), polyhexamethylene dodecamide (nylon 612), polyhexamethylene terephthalamide (nylon 6T), polyhexamethylene isophthalamide (nylon 6I), polynonamethylene dodecamide (nylon 912), polydecamethylene dodecamide (nylon 1012), polydodecamethylene dodecamide (nylon 1212), polymetaxylylene adipamide (nylon MXD6), polytrimethylhexamethylene terephthalamide (TMHT), polybis(4-aminocyclohexyl)methane dodecamide (nylon PACM12), polybis(3-methyl-4-aminocyclohexyl)methane dodecamide) (nylon dimethyl PACM12), polynonamethylene terephthalamide (nylon 9T), polydecamethylene terephthalamide) (nylon 10T), polyundecamethylene terephthalamide (nylon 11T), polydodecamethylene terephthalamide) (nylon 12T), a copolymer comprising several kinds of polyamide starting material monomers forming them and the like. Of these, polyolefin based resin, polyester based resin, polyamide based resin, polythioether based resin and fluorocarbon based resin are preferably used.

The polyether polyamide elastomer of the present invention can be advantageously employable for formation of a laminate of a polyamide elastomer which can be used for soles of sports shoes, ski boots and the like with thermoplastic polyurethane. In particular, the present invention is advantageous for providing a laminate obtained by directly laminating a polyamide elastomer excellent in adhesiveness to thermoplastic polyurethane with thermoplastic polyurethane.

In the laminate obtained by laminating a layer made of the polyether polyamide elastomer (hereinafter referred to as the X layer) and a layer made of polyurethane (hereinafter referred to as the Y layer), the proportion of (A) the polyamide-forming monomer is preferably from 10 to 95 weight %, further preferably from 15 to 95 weight %, more preferably from 15 to 85 weight % and particularly preferably from 15 to 80 weight %, based on the total components of the polyether polyamide elastomer.
When the proportion of the (A) the polyamide-forming monomer is within the above range based on the total components of the polyether polyamide elastomer, in particular, adhesiveness between the X layer and the Y layer is excellent, and mechanical properties as an elastomer such as strength, elastic modulus, flexibility and the like are excellent; therefore, it is preferable. When the proportion of (A) the polyamide-forming monomer is smaller than the above range based on the total components of the polyether polyamide elastomer, the adhesive strength between the X layer and the Y layer is lowered, and mechanical physical properties such as strength, elastic modulus and the like are deteriorated; therefore, it is not preferable in some case. When the proportion of (A) the polyamide-forming monomer is higher than the above range based on the total components of the polyether polyamide elastomer, functions and performance as an elastomer such as rubber elasticity, flexibility and the like are hardly exhibited; therefore, it is not preferable in some cases. It is assumed that the adhesive strength between the X layer and the Y layer is affected by intermolecular hydrogen bonding between amide bonding of the polyether polyamide elastomer and urethane bonding of polyurethane.

The X layer and/or the Y layer can be molded by a molding method such as injection molding, extrusion molding, blow molding, calendar molding or the like for obtaining a molded product.

The laminate can be obtained by (1) a method of forming layers each containing the X layer and the Y layer at the same time, (2) a method of forming respective layers and laminating them, (3) a method of laminating by forming a layer on a layer (tandem method) and the like, or a combination thereof.

In the Y layer, polyurethane used herein includes polyurethane obtained by reacting polyol and diisocyanate, polyurethane obtained by reacting a chain extender and diisocyanate, and polyurethane obtained by reacting polyol, diisocyanate and a chain extender. Polyurethane particularly preferably used is thermoplastic polyurethane.

In the Y layer, polyurethane preferably used is thermoplastic polyurethane having polyester diol and/or polyether diol as a soft segment.

Polyol used herein includes condensation type polyester polyol, lactone based polyester polyol, polycarbonate polyol, and polyether polyol.
As the condensation type polyester polyol, preferably used is polyester diol obtained by using one or two or more kinds of dicarboxylic acids and diols.

Examples of the dicarboxylic acid include aliphatic dicarboxylic acids such as glutaric acid, adipic acid, pimelic acid, suberic acid, azelaic acid, sebacic acid, dodecanedioic acid and the like; alicyclic dicarboxylic acids such as cyclohexanedicarboxylic acid and the like; aromatic dicarboxylic acids such as terephthalic acid, isophthalic acid, orthophthalic acid and the like; and their lower alkyl esters. These can be used alone, or two or more kinds can be used. Among these, preferably used are aliphatic dicarboxylic acids such as adipic acid, azelaic acid, sebacic acid and the like, and their lower alkyl ester.

Examples of diol include aliphatic diol such as ethylene glycol, 1,2-propylene glycol, 1,3-propylene glycol, 1,4-butanediol, 1,5-pentanediol, 3-methyl-1,5-pentanediol, 1,6-hexanediol, 1,7-heptanediol, 1,8-octanediol, 2-methyl-1,8-octanediol, 1,9-nonanediol, 1,10-decanediol, 1,11-undecanediol, 1,12-dodecanediol and the like; and alicyclic diol such as cyclohexanedimethanol, cyclohexanediol and the like. These can be used alone, or two or more kinds can be used. Among these, preferably used is aliphatic diol such as 1,5-pentanediol, 3-methyl-1,5-pentanediol, 1,6-hexanediol, 2-methyl-1,8-octanediol, 1,9-nonanediol, 1,12-dodecanediol or the like.

Examples of the lactone based polyester polyol include those obtained by a reaction of a lactone compound such as β-propiolactone, pivarolactone, δ-valerolactone, ε-caprolactone, methyl-ε-caprolactone, dimethyl-ε-caprolactone, trimethyl-ε-caprolactone or the like with a hydroxy compound such as short chain polyol or the like.

Examples of the polycarbonate diol include a polycarbonate diol obtained by a reaction of a low molecular weight diol with a carbonate compound such as alkyl carbonate, alkylene carbonate, diaryl carbonate and the like. As the low molecular weight diol of a production starting material of the polycarbonate diol, there can be used a low molecular weight diol cited above as starting material in the production of polyester diol. Furthermore, examples of the dialkyl carbonate include dimethyl carbonate, diethyl carbonate and the like, examples of the alkylene carbonate include ethylene carbonate and the like, and examples of the diaryl carbonate include diphenyl carbonate and the like.

Examples of the polyether polyol include polyethylene glycol, polypropylene glycol, polytetramethylene glycol, polyoxypropylene glycol, glycerin base polyalkylene ether glycol and the like. In addition to the above, various known polyurethane polyols can also be used.

The kind of polyisocyanate used for polyurethane is not particularly limited, and any of polyisocyanates which have been used for the production of polyurethane and preferably thermoplastic polyurethane from the past may be used.

As polyisocyanate, there can be used aliphatic or alicyclic diisocyanate such as tetramethylene diisocyanate, pentamethylene diisocyanate, hexamethylene diisocyanate, lysine diisocyanate, cyclohexylmethane diisocyanate, 2,2,4- or 2,4,4-trimethylhexamethylene diisocyanate, isopropylidene bis(4-cyclohexylisocyanate), isophorone diisocyanate and the like; and aromatic diisocyanate such as 2,4- or 2,6-tolylene diisocyanate, 4,4'-diphenylmethane diisocyanate, 3-methyldiphenylmethane-4,4'-diisocyanate, m- or p-phenylene diisocyanate, chlorophenylene 2,4-diisocyanate, naphthalene-1,5-diisocyanate, xylylene diisocyanate, tetramethylxylylene diisocyanate and the like. Among these, one or two or more polyisocyanates can be used. Among such polyisocyanates, preferably used is 4,4'-diphenylmethane diisocyanate.

The kind of the chain extender used for the production of polyurethane is not particularly limited, and any of usual chain extenders which have been used for the production of polyurethane from the past may be used. Preferably used is a low molecular weight compound with a molecular weight of not more than 300 having two or more active hydrogen atoms capable of reacting with an isocyanate group in a molecule.

Examples of the chain extender include diols such as ethylene glycol, propylene glycol, 1,4-butanediol, 1,6-hexanediol, 1,4-bis(ß-hydroxyethoxy)benzene, 1,4-cyclohexanediol, bis-(ß-hydroxyethyl)terephthalate, xylylene glycol and the like; diamines such as hydrazine, ethylene diamine, propylene diamine, xylylene diamine, isophorone diamine, piperazine and a derivative thereof, phenylene diamine, tolylene diamine, xylene diamine, adipic acid dihydrazide, isophthalic acid dihydrazide and the like; and alcohols such as aminoethyl alcohol, aminopropyl alcohol and the like. These can be used alone or two or more kinds thereof can be used. Among these, preferably used are aliphatic diol having 2 to 10 carbon atoms, and preferably 1,4-butanediol.

As the chain extender, there can be used polyhydric alcohol, polyhydric amine and the like. Specific examples of commercially available product names include Pandix (a product of Dainippon Ink and Chemicals, Inc.), Kuramiron (a product of Kuraray Co., Ltd.), Miractran (a product of Nippon Miractran Co., Ltd.) and the like.

As the thermoplastic polyurethane (TPU or the like), there can be used product names: Elastollan ET195, Elastollan ET690, Elastollan ET890 (products of BASF Japan Ltd.), product name: Pandix T-8190U (a product of Dainippon Ink and Chemicals, Inc.), product names: Miractran E190, Miractran E390, Miractran E490, Miractran E590, Miractran E990 (products of Nippon Polyurethane Industry Co., Ltd.) and the like.

The X layer can be blended with a thermoplastic resin having a good compatibility with polyetheramide such as other polyamide except polyetheramide, polyvinyl chloride, thermoplastic polyurethane, ABS resin and the like in such an amount that properties are not impaired. The X layer contains polyetheramide in an amount of preferably not less than 70 weight %, further preferably not less than 80 weight %, more preferably not less than 90 weight % and particularly preferably not less than 95 weight %. The Y layer can be blended with other thermoplastic polymer except polyurethane, elastomer, rubber and the like in such an amount that properties are not impaired.

Examples of the lamination constitution of the laminate of the present invention include X layer/Y layer, X layer/Y layer/X layer, Y layer/X layer/Y layer, X layer/Y layer/base material layer, base material layer/X layer/Y layer, X layer/Y layer/X layer/base material layer, Y layer/X layer/Y layer/base material layer, Y layer/X layer/adhesive layer/base material layer, X layer/Y layer/adhesive layer/base material layer, base material layer/adhesive layer/X layer/Y layer/X layer/adhesive layer/base material layer, base material layer/adhesive layer/Y layer/X layer/Y layer/adhesive layer/base material layer and the like. For the base material layer, there can be used a film, a sheet, a membrane and a molded product obtained from other polymer material except for the polymer constituting the X layer and Y layer; a woven fabric, a knit, a braided fabric and a nonwoven fabric obtained from natural or synthetic fiber or inorganic fibers made of glass, ceramic or the like as raw materials; glass, metal, ceramics, coating film, paper and the like; leather and the like.
As the adhesive layer, there can be used various known adhesive components, a sheet or a film having adhesiveness and the like, and those which do not impair properties of the present invention are preferably used.

The laminate of the present invention can be used for shoe materials such as sole materials of shoes, ski boots or the like, automobile parts and the like as two-color molded products by injection molding, while it can be used for hoses, tubes, belts and the like in addition to ski plates using film laminates as extrusion molded products.

The peel strength of the X layer and Y layer of the laminate of the present invention is preferably not less than 9.5 kg·cm and further preferably not less than 10.5 kg·cm. In the laminate of the present invention, when the Y layer is polyurethane having a soft segment of polyether diol, the peel strength of the X layer of the present invention and Y layer is preferably not less than 9.5 kg·cm, further preferably not less than 10.5 kg·cm and particularly preferably not less than 10.8 kg·cm. In the laminate of the present invention, when the Y layer is polyurethane having a soft segment of polyester diol, the peel strength of the X layer of the present invention and Y layer is preferably not less than 9.8 kg·cm, further preferably not less than 10.2 kg ·cm and particularly preferably not less than 10.5 kg·cm.

Warpage of the laminate of the present invention is preferably not more than 2.6 mm, further preferably not more than 2.5 mm and particularly preferably 2.4 mm.

### Examples

The present invention is now illustrated below with reference to Examples and Comparative Examples. However, the present invention is not restricted to these Examples.
Physical properties were measured in the following manner.

### 1) Relative viscosity ηr) (0.5 weight/volume % m-cresol solution, 25°C):

a relative viscosity was measured using an Ostwald's viscometer a concentration of 5 g/dm³ in m-cresol of special grade reagent as a solvent.

### 2) Terminal carboxyl group concentration ([COOH]):

To about 1 g of the polymer was added 40 mL of benzyl alcohol, and the resulting mixture was heated in a nitrogen gas atmosphere to dissolve the polymer. To the obtained sample solution was added phenolphthalein as an indicator and the solution was subjected to titration with an N/20 potassium hydroxide-ethanol solution.

### 3) Terminal amino group concentration ([NH₂]):

About 1 g of the polymer was dissolved in 40 mL of a mixed solution of phenol and methanol (volume ratio: 9/1) to obtain a sample solution. To the obtained sample solution was added thymol blue as an indicator and the solution was subjected to titration with an N/20 hydrochloric acid.

### 4) Number average molecular weight (In):

The number average molecular weight (Mn) was determined using the terminal carboxyl group concentration ([COOH]) and the terminal amino group concentration ([NH₂]) according to the following equation,
Mn = 2/(terminal amino group concentration [NH₂] + terminal carboxyl group concentration [COOH])

### 5) Melting point (Tm) and Crystallizing temperature (Tc):

Tm and Tc were determined in a nitrogen atmosphere using a differential scanning calorimeter DSC-50 manufactured by Shimazu Seisakusho Co., Ltd. The polymer was heated at a rate of 10°C/min from room temperature to 230°C (that is, first run temperature elevation) and kept at 230°C for 10 minutes. Then, the temperature was decreased to -100°C at a rate of 10°C/min (that is, first run temperature decrease) and subsequently heated to 230°C at a rate of 10°C/min (that is, second run temperature elevation). Based on the resulting DSC chart, Tc was determined as an exothermic peak temperature in the first run temperature decrease, and Tm was determined as an endothermic peak temperature in the second run temperature elevation.

### 6) Mechanical physical properties:

The following test pieces were molded by injection molding, and the resulting test pieces were used for measurement of (1) to (4) illustrated in the following:
(1) Tensile test (tensile strength at yield point and tensile elongation): A test piece of Type I described in ASTM D638 was used to perform tensile test in accordance with ASTM D638.
(2) Bending test (bending strength and bending modulus): A test piece having a size of 6.35 mm × 12.7 mm × 127 mm was used to perform bending test at 23°C in accordance with ASTM D790.
(3) Impact strength (Izot, with notch): A test piece having a size of 12.7 mm × 12.7 mm × 63.5 mm was used to measure impact strength at 23°C and -40°C in accordance with ASTM D256.
(4) Deflection temperature under load: A test piece having a size of 6.35 mm × 12.7 mm × 127 mm was used to measure a deflection temperature under a load of 0.45 MPa in accordance with ASTM D648.

### 7) Bending-fatigue resistance:

A sheet having a thickness of 3 mm molded by injection molding was cut in a shape of strip of 25 mm × 150 mm to give a test piece, and a bending (flex) test was carried out under conditions of the maximum distance between chucks of 75 mm, the minimum distance of 19 mm and the number of bending operation of 300 times/min according to the de Mattia method with reference to ASTM D813. The minimum number of bending operation causing cracks in the center of the test piece was measured for evaluating the bending-fatigue resistance. The test was carried out three times and their average data was adopted.

### 8) Hardness:

Shore D was measured in accordance with ASTM D2240. A sheet having a thickness of 6 mm molded by injection molding was used for measuring its hardness. The measurement was carried out at 23°C.

### 9) Haze (Degree of cloudiness):

Sheets of 25 mm × 60 mm × 1mm thick, 25mm × 60 mm × 2 mm thick and 25 mm × 60 mm × 3 mm thick molded by injection molding were used to measure haze in accordance with JIS K7105. The direct-reading type haze computer HGM-2DP manufactured by Suga Testing Machine Co., Ltd. was employed.

### 10) Peel strength:

Polyurethane was molded to a size of 80 mm × 80 mm × 1 mm thick (Y layer) under conditions of a resin temperature of 210°C and a mold temperature of 40°C by the injection molding method. The lower part of the molded product (Y layer) in the mold was covered with an aluminum foil having a size of 80 mm × 25 mm × 15 µm thick. To this molded product (Y layer), polyamide was injected for injection molding under conditions of a resin temperature of 240°C and a mold temperature of 40°C to prepare a laminate where polyamide and polyurethane are directly laminated. In order to prepare a sample for measuring the peel strength from this laminate, the sheet was cut in the longitudinal direction of the aluminum foil in a width of 10 mm to obtain a strip of 80 mm × 10 mm × 2 mm thick. The aluminum foil was peeled off from this strip to give a test piece for measuring the peel strength. The sizes of the bonding area and grip area of the chucks of tester during peel test were 55 mm × 10 mm and 25 mm × 10 mm, respectively.
The peel strength was measured by T peel test by means of Tensilon 2500 manufactured by Orientech Corp. The peel strength was measured under conditions of 5 mm for a space of chucks and a tensile rate of 20 mm/min. This test was repeatedly carried out five times per sample and their average data were adopted.

### 11) Warpage:

A laminate (thickness of polyetheramide is 1 mm, thickness of thermoplastic polyurethane is 1 mm) having a size of 80 mm × 80 mm × 2 mm thick obtained by directly laminating polyetheramide and thermoplastic polyurethane was placed on a horizontally set metal plate so that the thermoplastic polyurethane side faced the metal plate. A space between the thermoplastic polyurethane and the metal plate was measured using a microscope.
The laminate was produced by molding thermoplastic polyurethane under conditions of a resin temperature of 210°C and a mold temperature of 40°C and then molding polyamide elastomer under conditions of a resin temperature of 240°C and a mold temperature of 40°C on the thermoplastic polyurethane by injection molding.

### Production Example 1: Production of PAE1

In a 70-liter pressure vessel equipped with a stirrer, a thermometer, a torquemeter, a pressure gauge, a nitrogen gas inlet, a pressure controller and a polymer outlet were placed 14.000 kg of 12-aminododecanoic acid manufactured by UBE Industries, Ltd., 0.986 kg of adipic acid, 4.628 kg of XYX type triblock polyetherdiamine (XTJ-542, manufactured by Huntsman Corp., total amine: 1.94 meq/g), 0.384 kg of isophorone diamine (product name: VESTAMIN IPD, manufactured by Degussa Japan Co., Ltd.), 6 g of sodium hypophosphite monohydrate and 60 g of a heat resistant agent (Tominox 917, manufactured by Yoshitomi Pharmaceutical Co., Ltd). The gas inside of the vessel was fully replaced with nitrogen gas. Then, while the nitrogen gas was supplied at a rate of 186 liter/hour and the pressure inside of the vessel was adjusted to 0.05 MPa, the vessel was heated from room temperature to 230°C over 3.5 hours. The polymerization was further carried out in the vessel at 230°C for 4 hours while keeping the pressure inside of the vessel at 0.05 MPa to obtain a polymer. After the completion of polymerization, stirring was stopped and a molten colorless transparent polymer was taken out of the vessel through the polymer outlet in the form of string. The polymer string was cooled in water and pelletized to obtain approximately 15 kg of pellets.
The obtained pellets were colorless, translucent, tough polymer having good rubber elasticity. ηr=1.92, [COOH]=4.16×10⁻⁵ eq/g, [NH₂]=2.40 × 10⁻⁵ eq/g, Mn=30500, Tm=156.2°C, and Tc=112.7°C.

### Production Example 2: Production of PAE2

In a 70-liter pressure vessel equipped with a stirrer, a thermometer, a torquemeter, a pressure gauge, a nitrogen gas inlet, a pressure controller and a polymer outlet were placed 12.292 kg of 12-aminododecanoic acid manufactured by UBE Industries, Ltd., 1.246 kg of adipic acid, 6.000 kg of XYX type triblock polyetherdiamine (XTJ-542, manufactured by Huntsman Corp., total amine: 1.94 meq/g), 0.462 kg of isophorone diamine (product name: VESTAMIN IPD, manufactured by Degussa Japan Co., Ltd.), 6 g of sodium hypophosphite monohydrate and 60 g of a heat resistant agent (Tominox 917, manufactured by Yoshitomi Pharmaceutical Co., Ltd). The gas inside of the vessel was fully replaced with nitrogen gas. Then, while the nitrogen gas was supplied at a rate of 186 liter/hour and the pressure inside of the vessel was adjusted to 0.05 MPa, the vessel was heated from room temperature to 230°C over 3.5 hours. The polymerization was further carried out in the vessel at 230°C for 4 hours while keeping the pressure inside of the vessel at 0.05 MPa to obtain a polymer. After the completion of polymerization, stirring was stopped and a molten colorless transparent polymer was taken out of the vessel through the polymer outlet in the form of string. The polymer string was cooled in water and pelletized to obtain approximately 15 kg of pellets.
The obtained pellets were colorless, translucent, tough polymer having good rubber elasticity. ηr=1.93, [COOH]=3.71×10⁻⁵ eq/g, [NH₂]=2.53X10⁻⁵ eq/g, Mn=32100, Tm=151.8°C, and Tc=108.1°C.

### Production Example 3: Production of PAE3

In a 70-liter pressure vessel equipped with a stirrer, a thermometer, a torquemeter, a pressure gauge, a nitrogen gas inlet, a pressure controller and a polymer outlet were placed 13.248 kg of 12-aminododecanoic acid manufactured by UBE Industries, Ltd., 1.092 kg of adipic acid, 5.256 kg of XYX type triblock polyetherdiamine (XTJ-542, manufactured by Huntsman Corp., total amine: 1.94 meq/g), 0.404 kg of isophorone diamine (product name: VESTAMIN IPD, manufactured by Degussa Japan Co., Ltd.), 6 g of sodium hypophosphite monohydrate and 60 g of a heat resistant agent (Tominox 917, manufactured by Yoshitomi Pharmaceutical Co., Ltd). The gas inside of the vessel was fully replaced with nitrogen gas. Then, while the nitrogen gas was supplied at a rate of 186 liter/hour and the pressure inside of the vessel was adjusted to 0.05 MPa, the vessel was heated from room temperature to 230°C over 3.5 hours. The polymerization was further carried out in the vessel at 230°C for 4 hours while keeping the pressure inside of the vessel at 0.05 MPa to obtain a polymer. After the completion of polymerization, stirring was stopped and a molten colorless transparent polymer was taken out of the vessel through the polymer outlet in the form of string. The polymer string was cooled in water and pelletized to obtain approximately 15 kg of pellets.
The obtained pellets were colorless, translucent, tough polymer having good rubber elasticity. ηr=1.92, [COOH]=4.16x10⁻⁵ eq/g, [NH₂]=2.40×10⁻⁵ eq/g, Mn=30500, Tm=156.2°C, and Tc=112.7°C.

### Production Example 4: Production of PAE4

In a 70-liter pressure vessel equipped with an outlet were placed 14.172 kg of laurolactam, 0.831 kg of adipic acid and 2.000 kg of water. The gas inside of the vessel was fully replaced with nitrogen gas and then the vessel was pressurized and polymerized under a pressure of 4.02 MPa at 270°C for 6 hours. Then, the pressure was lowered to an atmospheric pressure by releasing the pressure to obtain a Nylon 12 prepolymer having carboxylic acid-rich terminal. The prepolymer had [COOH)=84.9×10⁻⁵ eq/g and [NH₂]=7.72×10⁻⁵ eq/g. To the resulting material, were placed 4.501 kg of XYX type triblock polyetherdiamine (XTJ-542, manufactured by Huntsman Corp., total amine: 1.94 meq/g), 0.242 kg of isophorone diamine (product name: VESTAMIN IPD, manufactured by Degussa Japan Co., Ltd.), 6 g of sodium hypophosphite monohydrate and 60 g of a heat resistant agent (Tominox 917, manufactured by Yoshitomi Pharmaceutical Co., Ltd). The gas inside of the vessel was fully replaced with nitrogen gas. Then, while the nitrogen gas was supplied at a rate of 186 liter/hour and the pressure inside of the vessel was adjusted to 0.05 MPa, the vessel was heated from room temperature to 230°C over 3.5 hours. The polymerization was further carried out in the vessel at 230°C for 4 hours while keeping the pressure inside of the vessel at 0.05 MPa to obtain a polymer. After the completion of polymerization, stirring was stopped and a molten colorless transparent polymer was taken out of the vessel through the polymer outlet in the form of string. The polymer string was cooled in water and pelletized to obtain approximately 16 kg of pellets.
The obtained pellets were colorless, translucent, tough polymer having good rubber elasticity. ηr=1.95, [COOH]=3.89×10⁻⁵ eq/g, [NH₂]=2.32×10⁻⁵ eq/g, Mn=32200, Tm=158.5°C, and Tc=115.1°C.

### Production Example 5: Production of PAE5

In a 70-liter pressure vessel equipped with a stirrer, a thermometer, a torquemeter, a pressure gauge, a nitrogen gas inlet, a pressure controller and a polymer outlet were placed 10.828 kg of 12-aminododecanoic acid manufactured by UBE Industries, Ltd., 1.264 kg of adipic acid, 7.708 kg of XYX type triblock polyetherdiamine (XTJ-542, manufactured by Huntsman Corp., total amine: 1.94 meq/g), 0.200 kg of isophorone diamine (product name: VESTAMIN IPD, manufactured by Degussa Japan Co., Ltd.), 6 g of sodium hypophosphite monohydrate and 60 g of a heat resistant agent (Tominox 917, manufactured by Yoshitomi Pharmaceutical Co., Ltd). The gas inside of the vessel was fully replaced with nitrogen gas. Then, while the nitrogen gas was supplied at a rate of 186 liter/hour and the pressure inside of the vessel was adjusted to 0.05 MPa, the vessel was heated from room temperature to 230°C over 3.5 hours. The polymerization was further carried out in the vessel at 230°C for 4.5 hours while keeping the pressure inside of the vessel at 0.05 MPa to obtain a polymer. After the completion of polymerization, stirring was stopped and a molten colorless transparent polymer was taken out of the vessel through the polymer outlet in the form of string. The polymer string was cooled in water and pelletized to obtain approximately 15 kg of pellets.
The obtained pellets were colorless, translucent, tough polymer having good rubber elasticity. ηr=1.99, [COOH]=3.14×10⁻⁵ eq/g, [NH₂]=2.41×10⁻⁵ eq/g, Mn=36000, Tm=151.4°C, and Tc=98.2°C.

### Production Example 6: Production of PAE6

In a 70-liter pressure vessel equipped with a stirrer, a thermometer, a torquemeter, a pressure gauge, a nitrogen gas inlet, a pressure controller and a polymer outlet were placed 10.086 kg of 12-aminododecanoic acid manufactured by UBE Industries, Ltd., 1.606 kg of adipic acid, 7.708 kg of XYX type triblock polyetherdiamine (XTJ-542, manufactured by Huntsman Corp., total amine: 1.94 meq/g), 0.600 kg of isophorone diamine (product name: VESTAMIN IPD, manufactured by Degussa Japan Co., Ltd.), 6 g of sodium hypophosphite monohydrate and 60 g of a heat resistant agent (Tominox 917, manufactured by Yoshitomi Pharmaceutical Co., Ltd). The gas inside of the vessel was fully replaced with nitrogen gas. Then, while the nitrogen gas was supplied at a rate of 186 liter/hour and the pressure inside of the vessel was adjusted to 0.05 MPa, the vessel was heated from room temperature to 230°C over 3.5 hours. The polymerization was further carried out in the vessel at 230°C for 6 hours while keeping the pressure inside of the vessel at 0.05 MPa to obtain a polymer. After the completion of polymerization, stirring was stopped and a molten colorless transparent polymer was taken out of the vessel through the polymer outlet in the form of string. The polymer string was cooled in water and pelletized to obtain approximately 15 kg of pellets.
The obtained pellets were colorless, translucent, tough polymer having good rubber elasticity. ηr=1.95, [COOH]=3.51×10⁻⁵ eq/g, [NH₂]=1.69×10⁻⁵ eq/g, Man=38500, Tm=142.8°C, and Tc=85.0°C.

### Production Example 7: Production of PAE7

In a 70-liter pressure vessel equipped with a stirrer, a thermometer, a torquemeter, a pressure gauge, a nitrogen gas inlet, a pressure controller and a polymer outlet were placed 10.456 kg of 12-aminododecanoic acid manufactured by UBE Industries, Ltd., 2.092 kg of adipic acid, 7.708 kg of XYX type triblock polyetherdiamine (XTJ-542, manufactured by Huntsman Corp., total amine: 1.94 meq/g), 0.400 kg of isophorone diamine (product name: VESTAMIN IPD, manufactured by Degussa Japan Co., Ltd.), 6 g of sodium hypophosphite monohydrate and 60 g of a heat resistant agent (Tominox 917, manufactured by Yoshitomi Pharmaceutical Co., Ltd). The gas inside of the vessel was fully replaced with nitrogen gas. Then, while the nitrogen gas was supplied at a rate of 186 liter/hour and the pressure inside of the vessel was adjusted to 0.05 MPa, the vessel was heated from room temperature to 230°C over 3.5 hours. The polymerization was further carried out in the vessel at 230°C for 5 hours while keeping the pressure inside of the vessel at 0.05 MPa to obtain a polymer. After the completion of polymerization, stirring was stopped and a molten colorless transparent polymer was taken out of the vessel through the polymer outlet in the form of string. The polymer string was cooled in water and pelletized to obtain approximately 15 kg of pellets.
The obtained pellets were colorless, translucent, tough polymer having good rubber elasticity. ηr=2.01, [COOH]=2.74×10⁻⁵ eq/g, [NH₂]=2.39×10⁻⁵ eq/g, Mn=39000, Tm=146.9°C, and Tc=88.2°C.

### Production Example 8: Production of PAE8

In a 70-liter pressure vessel equipped with a stirrer, a thermometer, a torquemeter, a pressure gauge, a nitrogen gas inlet, a pressure controller and a polymer outlet were placed 10.856 kg of 12-aminododecanoic acid manufactured by UBE Industries, Ltd., 1.386 kg of adipic acid, 7.708 kg of XYX type triblock polyetherdiamine (XTJ-542, manufactured by Huntsman Corp., total amine: 1.94 meq/g), 0.400 kg of isophorone diamine (product name: VESTAMIN IPD, manufactured by Degussa Japan Co., Ltd.), 6 g of sodium hypophosphite monohydrate and 60 g of a heat resistant agent (Tominox 917, manufactured by Yoshitomi Pharmaceutical Co., Ltd). The gas inside of the vessel was fully replaced with nitrogen gas. Then, while the nitrogen gas was supplied at a rate of 186 liter/hour and the pressure inside of the vessel was adjusted to 0.05 MPa, the vessel was heated from room temperature to 230°C over 3.5 hours. The polymerization was further carried out in the vessel at 230°C for 5.5 hours while keeping the pressure inside of the vessel at 0.05 MPa to obtain a polymer. After the completion of polymerization, stirring was stopped and a molten colorless transparent polymer was taken out of the vessel through the polymer outlet in the form of string. The polymer string was cooled in water and pelletized to obtain approximately 15 kg of pellets.
The obtained pellets were colorless, translucent, tough polymer having good rubber elasticity. ηr=2.01, [COOH]=2.21×10⁻⁵ eq/g, [NH₂]=2.40×10⁻⁵ eq/g, Mn=43400, Tm=146.4°C, and Tc=86.0°C.

### Production Example 9: Production of PAE9

In a 70-liter pressure vessel equipped with a stirrer, a thermometer, a torquemeter, a pressure gauge, a nitrogen gas inlet, a pressure controller and a polymer outlet were placed 10.856 kg of 12-aminododecanoic acid manufactured by UBE Industries, Ltd., 1.386 kg of adipic acid, 7.708 kg of XYX type triblock polyetherdiamine (XTJ-542, manufactured by Huntsman Corp., total amine: 1.94 meq/g), 0.316 kg of a mixture of 2,2,4-trimethyl-1,6-diaminohexane and 2,4,4-trimethyl-1,6-diaminohexane (product name: VESTAMIN TMD, manufactured by Degussa Japan Co., Ltd.), 6 g of sodium hypophosphite monohydrate and 60 g of a heat resistant agent (Tominox 917, manufactured by Yoshitomi Pharmaceutical Co., Ltd). The gas inside of the vessel was fully replaced with nitrogen gas. Then, while the nitrogen gas was supplied at a rate of 186 liter/hour and the pressure inside of the vessel was adjusted to 0.05 MPa, the vessel was heated from room temperature to 230°C over 3.5 hours. The polymerization was further carried out in the vessel at 230°C for 5.5 hours while keeping the pressure inside of the vessel at 0.05 MPa to obtain a polymer. After the completion of polymerization, stirring was stopped and a molten colorless transparent polymer was taken out of the vessel through the polymer outlet in the form of string. The polymer string was cooled in water and pelletized to obtain approximately 15 kg of pellets.
The obtained pellets were colorless, translucent, tough polymer having good rubber elasticity. ηr=2.06, [COOH]=2.03×10⁻⁵ eq/g, [NH₂]=2.20×10⁻⁵ eq/g, Mn=47300, Tm=145.8°C, and Tc=82.0°C.

### Production Example 10: Production of PAE10

In a 70-liter pressure vessel equipped with a stirrer, a thermometer, a torquemeter, a pressure gauge, a nitrogen gas inlet, a pressure controller and a polymer outlet were placed 10.086 kg of 12-aminododecanoic acid manufactured by UBE Industries, Ltd., 1.606 kg of adipic acid, 7.708 kg of XYX type triblock polyetherdiamine (XTJ-542, manufactured by Huntsman Corp., total amine: 1.94 meq/g), 0.542 kg of norbornanediamine (2,5- and 2,6-norbornanediamine mixture; product name: NBDA, manufactured by Mitsui Chemical Industries, Ltd.), 6 g of sodium hypophosphite monohydrate and 60 g of a heat resistant agent (Tominox 917, manufactured by Yoshitomi Pharmaceutical Co., Ltd). The gas inside of the vessel was fully replaced with nitrogen gas. Then, while the nitrogen gas was supplied at a rate of 186 liter/hour and the pressure inside of the vessel was adjusted to 0.05 MPa, the vessel was heated from room temperature to 230°C over 3.5 hours. The polymerization was further carried out in the vessel at 230°C for 6 hours while keeping the pressure inside of the vessel at 0.05 MPa to obtain a polymer. After the completion of polymerization, stirring was stopped and a molten colorless transparent polymer was taken out of the vessel through the polymer outlet in the form of string. The polymer string was cooled in water and pelletized to obtain approximately 15 kg of pellets.
The obtained pellets were colorless, translucent, tough polymer having good rubber elasticity. ηr=1.98, [COOH]=2.80×10⁻⁵ eq/g, [NH₂]=2.26×10⁻⁵ eq/g, Mn=39500, Tm=143.5°C, and Tc=83.0°C.

### Production Example 11 (Comparative Production Example): Production of PAE11

In a 70-liter pressure vessel equipped with a stirrer, a thermometer, a torquemeter, a pressure gauge, a nitrogen gas inlet, a pressure controller and a polymer outlet were placed 14.000 kg of 12-aminododecanoic acid manufactured by UBE Industries, Ltd., 0.744 kg of adipic acid, 5.256 kg of XYX type triblock polyetherdiamine (XTJ-542, manufactured by Huntsman Corp., total amine: 1.94 meq/g), 6 g of sodium hypophosphite monohydrate and 60 g of a heat resistant agent (Tominox 917, manufactured by Yoshitomi Pharmaceutical Co., Ltd). The gas inside of the vessel was fully replaced with nitrogen gas. Then, while the nitrogen gas was supplied at a rate of 186 liter/hour and the pressure inside of the vessel was adjusted to 0.05 MPa, the vessel was heated from room temperature to 230°C over 3.5 hours. The polymerization was further carried out in the vessel at 230°C for 2.5 hours while keeping the pressure inside of the vessel at 0.05 MPa to obtain a polymer. After the completion of polymerization, stirring was stopped and a molten colorless transparent polymer was taken out of the vessel through the polymer outlet in the form of string. The polymer string was cooled in water and pelletized to obtain approximately 15 kg of pellets.
The obtained pellets were colorless, translucent, tough polymer having good rubber elasticity. ηr=1.90, [COOH]=2.88×10⁻⁵ eq/g, [NH₂]=4.13×10⁻⁵ eq/g, Mn=28500, Tm=165.0°C, and Tc=129.7°C.

### Production Example 12 (Comparative Production Example): Production of PAE12

In a 70-liter pressure vessel equipped with a stirrer, a thermometer, a torquemeter, a pressure gauge, a nitrogen gas inlet, a pressure controller and a polymer outlet were placed 14.000 kg of 12-aminododecanoic acid manufactured by UBE Industries, Ltd., 1.058 kg of adipic acid, 4.558 kg of XYX type triblock polyetherdiamine (XTJ-542, manufactured by Huntsman Corp., total amine: 1.94 meq/g), 0.384 kg of metaxylylene diamine (a product of Mitsubishi Gas Chemical Co., Inc.), 6 g of sodium hypophosphite monohydrate and 60 g of a heat resistant agent (Tominox 917, manufactured by Yoshitomi Pharmaceutical Co., Ltd). The gas inside of the vessel was fully replaced with nitrogen gas. Then, while the nitrogen gas was supplied at a rate of 186 liter/hour and the pressure inside of the vessel was adjusted to 0.05 MPa, the vessel was heated from room temperature to 230°C over 3.5 hours. The polymerization was further carried out in the vessel at 230°C for 4 hours while keeping the pressure inside of the vessel at 0.05 MPa to obtain a polymer. After the completion of polymerization, stirring was stopped and a molten colorless transparent polymer was taken out of the vessel through the polymer outlet in the form of string. The polymer string was cooled in water and pelletized to obtain approximately 15 kg of pellets.
The obtained pellets were colorless, translucent, tough polymer having good rubber elasticity. ηr=1.98, [COOH]=3.87×10⁻⁵ eq/g, [NH₂]=2.50×10⁻⁵ eq/g, Mn=31500, Tm=155.8°C, and Tc=114.1°C.

### Production Example 13 (Comparative Production Example ): Production of PAE 13

In a 70-liter pressure vessel equipped with a stirrer, a thermometer, a torquemeter, a pressure gauge, a nitrogen gas inlet, a pressure controller and a polymer outlet were placed 11.200 kg of 12-aminododecanoic acid manufactured by UBE Industries, Ltd., 1.093 kg of adipic acid, 7.707 kg of XYX type triblock polyetherdiamine (XTJ-542, manufactured by Huntsman Corp., total amine: 1.94 meq/g), 6 g of sodium hypophosphite monohydrate and 60 g of a heat resistant agent (Tominox 917, manufactured by Yoshitomi Pharmaceutical Co., Ltd). The gas inside of the vessel was fully replaced with nitrogen gas. Then, while the nitrogen gas was supplied at a rate of 186 liter/hour and the pressure inside of the vessel was adjusted to 0.05 MPa, the vessel was heated from room temperature to 230°C over 3.5 hours. The polymerization was further carried out in the vessel at 230°C for 2.5 hours while keeping the pressure inside of the vessel at 0.05 MPa to obtain a polymer. After the completion of polymerization, stirring was stopped and a molten colorless transparent polymer was taken out of the vessel through the polymer outlet in the form of string. The polymer string was cooled in water and pelletized to obtain approximately 15 kg of pellets.
The obtained pellets were colorless, translucent, tough polymer having good rubber elasticity. ηr=2.01, [COOH]=2.49×10⁻⁵ eq/g, [NH₂]=2.61×10⁻⁵ eq/g, Mn=39200, Tm=150.2°C, and Tc=103.8°C.

### Examples 1 to 10, Comparative Examples 1 to 3

Pellets of PAE1 to 13 were molded by injection molding to obtain samples for measuring physical properties. Using the obtained samples, mechanical physical properties, deflection temperatures under load, bending-fatigue resistance, hardness and haze were measured. Furthermore, PAE1 to 13 were subjected to two-color molding with polyester diol based polyurethane (product name: Elastollan ET695, manufactured by BASF Japan Ltd., Hardness Shore A95), to prepare a laminate having two layers of TPU and PAE, and the peel strength and warpage thereof were measured. The respective results are illustrated in Table 1.
PAE1 to 10 of the present invention were PAE containing at least one diamine selected from a branched saturated diamine having 6 to 22 carbon atoms, a branched alicyclic diamine having 6 to 16 carbon atoms and norbornanediamine in their composition. It was found that PAE1 to 10 had low haze and were particularly excellent in transparency, as compared to PAE11 to 13 without containing these diamine compounds.

**[Table 1]**

| | | | Example 1 | Example 2 | Example 3 | Example 4 | Comp. Example 1 | Comp. Example 2 | Example 5 | Example 6 | Example 7 | Example 8 | Example 9 | Example 10 | Comp. Example 3 |
|---|---|---|---|---|---|---|---|---|---|---|---|---|---|---|---|
| Kind of PAE | | | PAE1 | PAE2 | PAE3 | PAE4 | PAE11 | PAE12 | PAE5 | PAE6 | PAE7 | PAE8 | PAE9 | PAE10 | PAE13 |
| Tensile strength at yield point | | MPa | 15.4 | 12.4 | 13.9 | 15.7 | 15.2 | 15.6 | 9.2 | 7.4 | 7.8 | 8.1 | 9.3 | 7.5 | 10.2 |
| Tensile elongation at break | | % | >300 | >300 | >300 | >300 | >300 | >300 | >300 | >300 | >300 | >300 | >300 | >300 | >300 |
| Bending strength | | MPa | 13.2 | 9.6 | 11.4 | 13.5 | 12.3 | 13.4 | 7.8 | 6.4 | 6.9 | 7.3 | 8.1 | 6.3 | 7.8 |
| Bending modulus | | MPa | 260 | 186 | 220 | 270 | 236 | 257 | 133 | 103 | 115 | 123 | 130 | 107 | 144 |
| Impact strength (izot, with notch) | 23°C | J/m | NB | NB | NB | NB | NB | NB | NB | NB | NB | NB | NB | NB | NB |
| | -40°C | J/m | 52 | 49 | 49 | 50 | 78 | 52 | 153 | 233 | 314 | 321 | 160 | 240 | 238 |
| Deflection temperature under load 0.45 MPa) | | °C | 76 | 65 | 77 | 80 | 85 | 81 | 63 | 50 | 55 | 56 | 65 | 50 | 60 |
| Shore hardness (D acale) | | | 63 | 63 | 63 | 63 | 63 | 63 | 55 | 55 | 55 | 55 | 55 | 55 | 55 |
| Haze | 1mm thick | % | 4.3 | 2.3 | 2.6 | 4.2 | 32.6 | 28.7 | 2.8 | 1.9 | 2.2 | 2.2 | 2.5 | 2.0 | 16.1 |
| | 2mm thick | % | 48.1, | 18.0 | 29.5 | 8.0 | 70.4 | 68.3 | 17.2 | 3.9 | 7.4 | 7.8 | 15.8 | 4.0 | 53.8 |
| | 3mm thick | % | 70.2 | 36.1 | 51.7 | 71.2 | 81.4 | 78.9 | 33.4 | 10.5 | 18.0 | 17.7 | 31.6 | 10.0 | 74.8 |
| Number of bending operation to produce cracks | | times | 100000 | 150000 | 150000 | 100000 | 180000 | 100000 | - | - | - | - | - | - | - |
| Peel strength | | kgcm | 11.8 | 11.1 | 12.1 | 11.5 | 11.5 | 11.3 | 11.3 | 11.8 | 11.7 | 11.2 | 11.8 | 11.7 | 11.0 |
| Warpage | | mm | 1.14 | 1.25 | 1.38 | 1.13 | 2.04 | 1.76 | 1.87 | 1.45 | 1.73 | 1.68 | 2.03 | 1.46 | 1.22 |

### Industrial Applicability

The polyether polyamide elastomer of the present invention, has sufficiently low water absorption, satisfactory physical properties such as bending-fatigue resistance and the like, excellent adhesiveness to a resin sheet such as a polyurethane sheet or the like, and excellent transparency. Thus, the polyether polyamide elastomer of the present invention is useful in various applications as an elastomer.

## Claims

1. A polyether polyamide elastomer obtained by polymerizing:
(A) a polyamide-forming monomer selected from an aminocarboxylic acid compound (A1) represented by the following formula (1) and a lactam compound (A2) represented by the following formula (2),
(B) diamine compounds comprising a triblock polyetherdiamine compound (B1) represented by the following formula (3) and at least one diamine compound (B2) selected from a branched saturated diamine having 6 to 22 carbon atoms, a branched alicyclic diamine having 6 to 16 carbon atoms and norbornanediamine, and
(C) a dicarboxylic acid compound represented by the following formula (4) ,
H₂N-R¹-COOH (1)
wherein R¹ represents a linking group having a hydrocarbon chain, 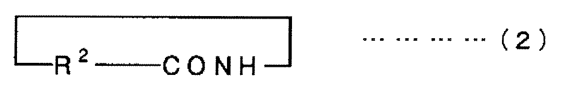 wherein R² represents a linking group having a hydrocarbon chain, 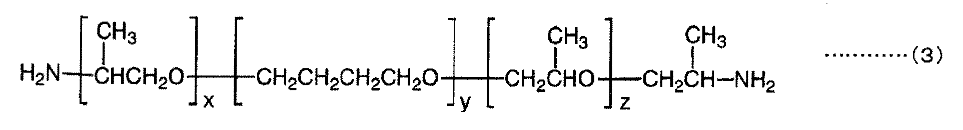 wherein x represents a number from 1 to 20, y represents a number from 4 to 50, and z represents a number from 1 to 20, 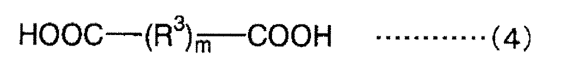 wherein R³ represents a linking group having a hydrocarbon chain, and m represents 0 or 1.

2. The polyether polyamide elastomer according to claim 1, wherein the proportion of (A) the polyamide-forming monomer is from 10 to 95 weight %, based on the total amount of (A) the polyamide-forming monomer, (B) the diamine compound and (C) the dicarboxylic acid compound.

3. The polyether polyamide elastomer according to claim 1, wherein the proportion of (A) the polyamide-forming monomer is from 15 to 80 weight %, based on the total amount of (A) the polyamide-forming monomer, (B) the diamine compound and (C) the dicarboxylic acid compound.

4. The polyether polyamide elastomer according to any one of claims 1 to 3, wherein R¹ in the formula (1) contains an alkylene group having 2 to 20 carbon atoms.

5. The polyether polyamide elastomer according to any one of claims 1 to 3, wherein R² in the formula (2) contains an alkylene group having 2 to 20 carbon atoms.

6. The polyether polyamide elastomer according to any one of claims 1 to 5, wherein x in the formula (3) represents a number from 2 to 6, y represents a number from 6 to 12, and z represents a number from 1 to 5 respectively.

7. The polyether polyamide elastomer according to any one of claims 1 to 5, wherein x in the formula (3) represents a number from 2 to 10, y represents a number from 13 to 28, and z represents a number from 1 to 9 respectively.

8. The polyether polyamide elastomer according to any one of claims 1 to 7, wherein the proportion of the diamine compound (B2) is from 0.5 to 10 weight %, based on the total amount of (A) the polyamide-forming monomer, (B) the diamine compound and (C) the dicarboxylic acid compound.

9. The polyether polyamide elastomer according to any one of claims 1 to 8, wherein the branched saturated diamine having 6 to 22 carbon atoms is diamine selected from 2,2,4-trimethyl-1,6-diaminohexane, 2,4,4-trimethyl-1,6-diaminohexane, 1,2-diaminopropane, 1,3-diaminopentane, 2-methyl-1,5-diaminopentane, 2-methyl-1,8-diaminooctane and a mixture thereof.

10. The polyether polyamide elastomer according to any one of claims 1 to 8, wherein the branched alicyclic diamine having 6 to 16 carbon atoms is diamine selected from 5-amino-2,2,4-trimethyl-1-cyclopentanemethylamine, 5-amino-1,3,3-trimethylcyclohexanemethylamine and a mixture thereof.

11. The polyether polyamide elastomer according to any one of claims 1 to 8, wherein norbornanediamine is diamine selected from 2,5-norbornanedimethylamine, 2,6-norbornanedimethylamine and a mixture thereof.

12. The polyether polyamide elastomer according to any one of claims 1 to 11, wherein (C) the dicarboxylic acid compound is an aliphatic dicarboxylic acid or an alicyclic dicarboxylic acid.

13. The polyether polyamide elastomer according to any one of claims 1 to 12, wherein m in the formula (4) represents 1 and R³ represents an alkylene group having 1 to 20 carbon atoms.

14. A laminate obtained by laminating a layer made of the polyether polyamide elastomer according to any one of claims 1 to 13 and a layer made of other thermoplastic resin.

15. The laminate according to claim 14, wherein the other thermoplastic resin is polyurethane.

16. The laminate according to claim 15, wherein the polyurethane is thermoplastic polyurethane.

17. The laminate according to claim 16, wherein the thermoplastic polyurethane has a polyester diol soft segment and/or a polyether diol soft segment and/or a polycarbonate diol soft segment and/or a polycaprolactone diol soft segment.
